# EUROPÄISCHE PATENTANMELDUNG

(11) **EP 2 262 084 A1**
(43) Veröffentlichungstag der Anmeldung: **15.12.2010**
(21) Anmeldenummer: 09007761.1
(22) Anmeldetag: 12.06.2009
(51) Int. Cl.: H02K 33/16

(54) **Elektromotor für ein elektrisches Kleingerät**

(71) Anmelder: Braun GmbH, 61476 Kronberg/Taunus (DE)
(72) Erfinder: Doll, Alexander, 61476 Kronberg/Taunus (DE); Schober, Uwe, 61479 Glashütten (DE); Kreßmann, Frank, 65760 Eschborn (DE)

(57) **Zusammenfassung**

Die Erfindung betrifft einen Elektromotor (10,48,68,100,128) zum Betreiben eines elektrischen Kleingeräts, mit einer ersten schwingungsfähigen Motorkomponente (22,54,70,140) und einer Spule (24,56,74,130) zur Erzeugung eines Magnetfeldes. Eine erste Magnetanordnung weist wenigstens einen ersten Permanentmagneten (14,16,18,20,50,52,76,134,136,138) auf, der in Wechselwirkung mit einem mit der Spule (24,56,74,130) erzeugten Magnetfeld eine Kraft zur Anregung einer rotatorischen Schwingungsbewegung der ersten schwingungsfähigen Motorkomponente (22,54,70,140) um eine Drehachse erzeugt.
Erfindungsgemäß sind die erste schwingungsfähige Motorkomponente (22,54,70,140) und die erste Magnetanordnung derart ausgestaltet, dass das zwischen der ersten schwingungsfähigen Motorkomponente (22,54,70,140) und dem wenigstens einen Permanentmagneten (14,16,18,20,50,52,76,134,136,138) der ersten Magnetanordnung wirkende magnetische Reluktanzmoment als Rückstellmoment für die rotatorische Schwingungsbewegung wirkt.
Weiterhin betrifft die Erfindung ein elektrisches Kleingerät mit einem erfindungsgemäßen Elektromotor, ein Verfahren zum Betreiben eines erfindungsgemäßen Elektromotors und ein Verfahren zur Herstellung eines erfindungsgemäßen Elektromotors.

## Beschreibung

### ELEKTROMOTOR FÜR EIN ELEKTRISCHES KLEINGERÄT

Die Erfindung betrifft einen Elektromotor zum Betreiben eines elektrischen Kleingerätes und ein elektrisches Kleingerät mit einem solchen Elektromotor. Weiterhin bezieht sich die Erfindung auf ein Verfahren zum Betreiben eines solchen Elektromotors und ein Verfahren zu seiner Herstellung.

WO 2005/006538 A1 ist auf ein elektrisches Kleingerät mit einem Elektromotor zur Erzeugung einer oszillierenden Bewegung gerichtet. Dabei sind zwei Antriebskomponenten vorgesehen, von denen eine über wenigstens ein elastisches Element mit einem beweglichen Bauteil verbunden und mittels eines Magnetfelds einer Spule zu einer oszillierenden Bewegung anregbar ist. Die beiden Antriebskomponenten sind über ein weiteres elastisches Element miteinander verbunden und derart ausgestaltet, dass sie sich gegenseitig antreiben und zur Ausführung von zueinander gegenphasig oszillierenden Bewegungen in dem elektrischen Kleingerät angeordnet sind.

Es sind Elektromotoren bekannt, die eine rotatorische und eine translatorische Schwingungsbewegung erzeugen können und z.B. für elektrische Zahnbürsten eingesetzt werden. Ein Elektromotor, wie er in WO 2005/062445 beschrieben ist, weist zwei schwingungsfähige Motorkomponenten und eine Magnetanordnung mit mehreren Permanentmagneten auf. Eine Spule ist zur Erzeugung eines Magnetfeldes vorgesehen. In Wechselwirkung mit der Magnetanordnung wirkt dieses Magnetfeld zur Erzeugung einer Kraft zur Anregung einer translatorischen Schwingungsbewegung einer der schwingungsfähigen Komponenten. Die Wechselwirkung des mit der Spule erzeugten Magnetfeldes und der Magnetanordnung erzeugt zusätzlich ein Drehmoment zur Anregung einer rotatorischen Schwingungsbewegung einer zweiten schwingungsfähigen Motorkomponente. Mit einer solchen Anordnung kann sowohl eine translatorische als auch eine rotatorische Schwingungsbewegung erzeugt werden, ohne dass ein Getriebe erforderlich wäre.

Bei einer elektrischen Zahnbürste gemäß EP 0 850 027 B1 ist in einem Griffgehäuse eine elektromotorische Antriebseinheit in einem Gehäuse vorgesehen, die zum einen eine Rotationsbewegung mit Hilfe eines Getriebes auf eine Welle überträgt, die z.B. in eine drehende Bewegung eines Borstenkopfes der Zahnbürste umgesetzt werden kann. Eine zweite Komponente der elektromotorischen Antriebseinheit ist exzentrisch mit dem Abtrieb des Elektromotors verbunden und bewirkt so eine translatorische Schwingungsbewegung einer Schwinge um eine quer zur Motorachse liegende Achse. Diese Schwenkbewegung wird von der Schwinge und der darin geführten Welle, die zur Übertragung der rotatorischen Schwingungsbewegung dient, mitgemacht.

Eine Antriebseinheit zur Erzeugung einer oszillierenden Bewegung z.B. zur Erzeugung einer Rotationsschwingung des Bürstenkopfes einer elektrischen Zahnbürste oder eines elektrischen Rasierapparates beschreibt WO 2005/048437. Ein nicht rotationssymmetrisch ausgebildeter Läufer bewegt sich in einem Stator, der eine Spule und eine erste und eine zweite Magnetanordnung aufweist. Der Läufer weist einen ersten und einen zweiten radialen Fortsatz auf, wobei die Magnetanordnungen relativ zu den radialen Fortsätzen des Läufers eine paarweise Zuordnung zwischen den Magnetanordnungen und den radialen Fortsätzen erlauben. Dabei ist die Anordnung derart gewählt, dass die magnetische Wechselwirkung zwischen der Magnetanordnung und dem radialen Fortsatz eines jeweiligen Paares größer ist als die magnetische Wechselwirkung zwischen der Magnetanordnung und dem radialen Fortsatz zweier verschiedener Paare. Auf diese Weise ist es möglich, den Läufer mit einer niedrigen Masse und einem niedrigen Trägheitsmoment auszugestalten. Der Läufer ist mit dem Stator über eine von einem elastischen Element bereitgestellte rückstellende Wechselwirkung gekoppelt und bildet so ein schwingungsfähiges System. Durch eine periodische Umpolung des Stromflusses in den Spulen wird hier eine oszillierende Drehbewegung des Läufers erzeugt. Die jeweilige Drehbewegung in Richtung der Ruheposition wird zudem durch das von dem elastischen Element erzeugte rückstellende Moment unterstützt. Als zusätzliche Feder wird das magnetische Rückstellmoment berücksichtigt, das durch die Magnete einer Magnetanordnung auf den Läufer ausgeübt wird. Ausgestaltungen beschreiben als elastisches Element für die rückstellende Wechselwirkung einen Torsionsstab, eine Schraubenfeder oder eine Spiralfeder, mit deren Hilfe der Läufer mit dem Stator gekoppelt ist. Die Resonanzfrequenz hängt von dem durch den Läufer und das elastische Element, z.B. den Torsionsstab, gebildete Feder-Masse-System ab.

Aufgabe der vorliegenden Erfindung ist es, einen Elektromotor für ein elektrisches Kleingerät und ein solches elektrisches Kleingerät anzugeben, die eine kleine Bauform und eine kostengünstige Ausgestaltung ermöglichen. Außerdem soll ein Verfahren zum Betrieb eines solchen Elektromotors und ein Verfahren zur Herstellung eines solchen Elektromotors angegeben werden.

Die Aufgabe wird mit einem Elektromotor mit den Merkmalen des Anspruchs 1, ein elektrisches Kleingerät mit den Merkmalen des Anspruchs 14, ein Verfahren zum Betreiben eines Elektromotors mit den Merkmalen des Anspruchs 16 bzw. ein Verfahren zur Herstellung eines Elektromotors mit den Merkmalen des Anspruchs 17 gelöst.

Vorteilhafte Ausgestaltungen sind jeweils Gegenstand von Unteransprüchen.

Ein erfindungsgemäßer Elektromotor weist wenigstens eine erste schwingungsfähige Motorkomponente und eine Spule zur Erzeugung eines Magnetfeldes auf. Eine erste Magnetanordnung mit wenigstens einem ersten Permanentmagneten ist vorgesehen, die in Wechselwirkung mit einem mit der Spule erzeugten Magnetfeld eine Kraft zur Anregung einer rotatorischen Schwingungsbewegung der ersten schwingungsfähigen Komponente um eine Drehachse erzeugt und daher insbesondere zur Bereitstellung einer rotatorischen Schwingungsbewegung dient.

Insbesondere zeichnet sich der erfindungsgemäße Elektromotor dadurch aus, dass die wenigstens eine erste schwingungsfähige Motorkomponente und die erste Magnetanordnung derart ausgestaltet bzw. angeordnet sind, dass das zwischen der ersten schwingungsfähigen Motorkomponente und dem wenigstens einen Permanentmagneten wirkende magnetische Reluktanzmoment als Rückstellmoment für die rotatorische Schwingungsbewegung wirkt.

Bei eingeschaltetem Spulenstrom induziert die Spule einen magnetischen Fluss in der ersten schwingungsfähigen Motorkomponente, die sich zur Energieminimierung entsprechend des von der ersten Magnetanordnung erzeugten Magnetfeldes ausrichtet. Wird nach dieser Ausrichtbewegung der Strom durch die Spule zu Null gewählt, trachten die Magnetfeldlinien der ersten Magnetanordnung dazu, sich möglichst weitgehend über die erste schwingungsfähige Komponente kurzzuschließen. Dadurch erfährt die erste schwingungsfähige Komponente ein Rückstellmoment (Reluktanzmoment), das die erste schwingungsfähige Motorkomponente in seine Ausgangslage zurückstellt.

Mit einem erfindungsgemäßen Elektromotor ist es möglich, auf zusätzliche mechanische Schwingfedern vollständig zu verzichten, da die Rückstellkräfte allein durch das magnetische Reluktanzmoment zur Verfügung gestellt werden. Die Motorkonstruktion ist auf diese Weise sehr viel einfacher und die Anzahl der Komponenten verringert. Dies wirkt sich auf die Größe der Bauform und die Herstellungskosten positiv aus.

Ein erfindungsgemäßes Verfahren zum Betreiben eines Elektromotors ist dementsprechend **dadurch gekennzeichnet, dass** das magnetische Reluktanzmoment, das zwischen der wenigstens einen schwingungsfähigen Motorkomponente und dem wenigstens einen Permanentmagneten wirkt, als Rückstellmoment für die rotatorische Schwingungsbewegung verwendet wird.

Ein vorteilhaftes Verfahren zur Herstellung eines erfindungsgemäßen Elektromotors zeichnet sich insbesondere dadurch aus, dass die Geometrien der ersten schwingungsfähigen Motorkomponente und des wenigstens einen Permanentmagnetes der ersten Magnetanordnung derart festgelegt werden, dass das magnetische Reluktanzmoment als Rückstellmoment für die rotatorische Schwingungsbewegung verwendet werden kann. Dies kann auf besonders bevorzugte Weise im Rahmen einer numerischen Simulation der einzelnen Komponenten und der zwischen ihnen wirkenden Kräfte geschehen. Die numerische Simulation erspart dabei entsprechende gegenständliche Testreihen und ermöglicht es, die einzelnen Parameter sehr fein im vorhinein festzulegen. Die übrigen Verfahrensschritte bei der Herstellung der Elektromotoren sind an sich bekannt und nicht erfindungswesentlich. Sie werden deswegen nicht gesondert geschildert.

Als besonders sensitive Parameter werden z.B. der Rotoröffnungswinkel der wenigstens einen schwingungsfähigen Motorkomponente und der Magnetsegmentwinkel der ersten Magnetanordnung entsprechend simuliert und festgelegt.

Eine besonders bevorzugte Ausgestaltung des erfindungsgemäßen Elektromotors weist z.B. mit Hilfe des erfindungsgemäßen Verfahrensschrittes zur Herstellung eines erfindungsgemäßen Elektromotors festgelegte Geometrien auf, die zu einem linearen Verlauf der Abhängigkeit des magnetischen Reluktanzmomentes von dem Auslenkungswinkel zumindest in einem Bereich des Auslenkungswinkels der ersten schwingungsfähigen Komponente unterhalb eines Maximalauslenkungswinkels führen. Auf diese Weise wirkt das magnetische Reluktanzmoment als lineares Rückstellmoment ähnlich einer mechanischen Feder.

Besonders vorteilhafte Ausführungsformen des erfindungsgemäßen Elektromotors ermöglichen die zusätzliche Anregung einer translatorischen Schwingungsbewegung. Dies kann z.B. bei einer elektrischen Zahnbürste von Nutzen sein, bei der zum einen eine rotatorische Bewegung eines die Borsten tragenden Borstenkopfes und zum anderen eine translatorische Stocherbewegung des Borstenkopfes zur Entfernung von Plaque gewünscht ist. Dazu eignet es sich insbesondere, wenn die translatorische Schwingungsbewegung senkrecht zur Achse der rotatorischen Schwingungsbewegung ist.

Dazu ist bei einer Ausführungsform des erfindungsgemäßen Elektromotors wenigstens eine zweite schwingungsfähige Motorkomponente und eine zweite Magnetanordnung mit wenigstens einem zweiten Permanentmagneten vorgesehen, die in Wechselwirkung mit einem mit der Spule erzeugten Magnetfeld eine Kraft zur Anregung einer solchen translatorischen Schwingungsbewegung der wenigstens einen zweiten schwingungsfähigen Komponente erzeugt.

Bei einer anderen Ausführungsform ist eine zweite Magnetanordnung vorgesehen, die wenigstens einen Permanentmagneten aufweist, die in Wechselwirkung mit einem mit der Spule erzeugten Magnetfeld eine Kraft zur Anregung einer zusätzlichen translatorischen Schwingungsbewegung der wenigstens einen ersten schwingungsfähigen Motorkomponente erzeugt. Die zuletzt beschriebene Ausführungsform ermöglicht einen weiter vereinfachten und mit weniger Komponenten herstellbaren Elektromotor, da nur eine schwingungsfähige Motorkomponente zur Bereitstellung der zwei unterschiedlichen Schwingungsbewegungen notwendig ist. Im Gegensatz dazu sind bei der zuerst genannten Ausführungsform mit zwei Schwingungsbewegungen die translatorische und die rotatorische Schwingungsbewegung stärker voneinander entkoppelt und daher sehr einfach an spezielle Anforderungen anpassbar.

Wenn die Ausgestaltung derart ist, dass die translatorische und die rotatorische Schwingungsbewegung unterschiedliche Resonanzfrequenzen aufweisen, lassen sich die einzelnen Bewegungen mit entsprechend ausgewählten Anregungsfrequenzen des Spulenstroms selektiv oder mit unterschiedlichen Amplitudenverhältnissen anregen. So lassen sich bei einer elektrischen Zahnbürste durch Ansteuerung mit entsprechenden Frequenzen z.B. unterschiedliche Putzprogramme auswählen.

Eine besonders einfache und in der Herstellung günstige Ausgestaltung des Elektromotors zeichnet sich dadurch aus, dass die erste Magnetanordnung mehrere koaxial zu der ersten schwingungsfähigen Komponente angeordnete Permanentmagnete umfasst. Die Permanentmagnete mit entsprechend ausgewählter Polung können sich z.B. in Umfangsrichtung um die erste schwingungsfähige Komponente gruppieren. Eine alternative Ausgestaltung sieht vor, dass die Permanentmagnete der ersten und gegebenenfalls der zweiten Magnetanordnung nach Art eines Innenrotors zusammen mit der ersten schwingungsfähigen Komponente schwingen.

Bei einer platzsparenden Ausführungsform, bei der die erste schwingungsfähige Motorkomponente nicht nur die rotatorische, sondern auch die translatorische Schwingungsbewegung ausführt, weist die zweite Magnetanordnung vorzugsweise mehrere Permanentmagnete auf, die sich in wenigstens einer axialen Richtung an die Permanentmagnete der ersten Magnetanordnung anschließen.

Bei einer bevorzugten Ausgestaltung des erfindungsgemäßen Elektromotors, bei der die rotatorische Schwingungsbewegung von einer ersten schwingungsfähigen Motorkomponente und die translatorische Schwingungsbewegung von einer zweiten schwingungsfähigen Motorkomponente erzeugt wird, ist ein Flussleitelement vorgesehen, das derart angeordnet ist, dass es mit der Spule erzeugten magnetischen Fluss zur Wechselwirkung mit dem wenigstens zweiten Permanentmagneten leitet. So ist es auf einfache Weise möglich, dass die Rotationsbewegung und die translatorische Bewegung voneinander unabhängig sind und die Winkelauslenkung der zur rotatorischen Schwingungsbewegung angeregten schwingungsfähigen Motorkomponente das Verhalten der zur translatorischen Schwingungsbewegung angeregten Motorkomponente nicht beeinflusst, obwohl beide durch das Magnetfeld ein- und derselben Spule angeregt werden. Das Flussleitelement kann z.B. ein die Spulenwindungen der Magnetfeld erzeugenden Spule durchgreifendes metallisches Joch umfassen.

Ein erfindungsgemäßes elektrisches Kleingerät weist wenigstens ein in zumindest einer rotatorischen Richtung schwingungsfähiges Element auf, das von einem erfindungsgemäßen Elektromotor zur Anregung der zumindest einen rotatorischen Schwingungsbewegung angeregt wird. Zum Beispiel kann es sich bei dem erfindungsgemäßen elektrischen Kleingerät um einen elektrischen Rasierapparat mit einem Scherkopf handeln. Besonders vorteilhaft lässt sich der erfindungsgemäße Elektromotor in einer elektrischen Zahnbürste einsetzen, wobei das schwingungsfähige Element einen Bürstenkopf umfasst.

Besonders vorteilhafte Ausgestaltungen des erfindungsgemäßen elektrischen Kleingerätes ergeben sich aus der obigen Schilderung der besonders vorteilhaften Ausführungsformen des erfindungsgemäßen Elektromotors.

Die Erfindung wird anhand der beiliegenden Figuren im Detail erläutert, die beispielhaft und schematisch verschiedene erfindungsgemäße Ausführungsformen darstellen. Es zeigen:
- Fig. 1: in teiltransparenter Darstellung eine erste Ausführungsform eines erfindungsgemäßen Elektromotors,
- Fig. 2: einen Querschnitt durch die Rotationseinheit einer leicht abgewandel- ten Ausführungsform eines erfindungsgemäßen Elektromotors,
- Fig. 3a und 3b: schematische Darstellungen zur Erläuterung des Rückstellmomentes für die rotatorische Schwingungsbewegung bei einem erfindungsge- mäßen Elektromotor,
- Fig. 4: den Verlauf des Reluktanzmomentes in Abhängigkeit des Auslen- kungswinkels des Rotors für ein Beispiel eines erfindungsgemäßen Elektromotors,
- Fig. 5a und 5b: schematische Darstellungen zur Erläuterung der Reluktanzkraft bei einer translatorischen Auslenkung des Rotors einer Ausführungsform eines erfindungsgemäßen Elektromotors,
- Fig. 6: die Anordnung der Permanentmagnete der ersten und zweiten Ma- gnetanordnung für eine zweite Ausführungsform eines erfindungs- gemäßen Elektromotors,
- Fig. 7: eine Schemazeichnung einer dritten Ausführungsform eines erfin- dungsgemäßen Elektromotors,
- Fig. 8: eine Schemazeichnung einer vierten Ausführungsform eines erfin- dungsgemäßen Elektromotors,
- Fig. 9: eine Schemazeichnung einer fünften Ausführungsform eines erfin- dungsgemäßen Elektromotors, und
- Fig. 10: die Schemazeichnung einer sechsten Ausführungsform eines erfin- dungsgemäßen Elektromotors.

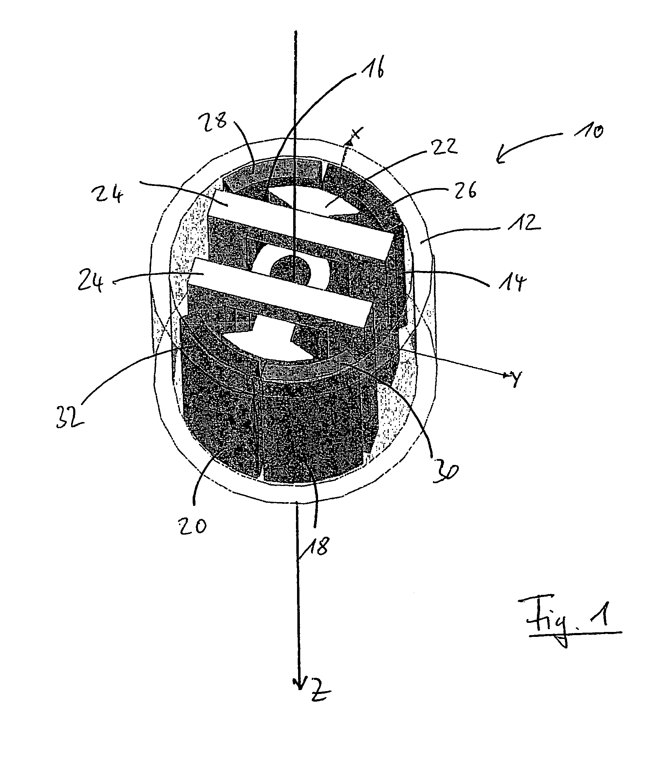

Fig. 1 zeigt in teiltransparenter Darstellung einen erfindungsgemäßen Elektromotor 10. In einem metallischen Gehäuse 12, das hier transparent dargestellt ist, um die darin befindlichen Komponenten zeigen zu können, befindet sich eine erste Magnetanordnung mit Permanentmagneten 14, 16, 18, 20. Die Anordnung ist hier so gewählt, dass bei den Magneten 14 und 18 der magnetische Südpol zur z-Achse weist, also radial nach innen, während der magnetische Nordpol radial nach außen zeigt. Bei den Magneten 16 und 20 hingegen weist der magnetische Südpol radial nach außen und der magnetische Nordpol radial nach innen zur Rotationsachse z. Diese Permanentmagnete 14, 16, 18, 20 bilden die erste Magnetanordnung, die zur Erzeugung einer rotatorischen Schwingungsbewegung des Rotors 22 um die Drehachse z eingesetzt wird. Dazu weist der Elektromotor 10 eine hier zweiteilige elektromagnetische Spule 24 auf, deren Wicklungsflächen senkrecht auf der Koordinatenachse x stehen. Der Rotor 22 ist aus geeignetem metallischem und magnetisierbarem Material, z.B. Eisen.

Eine zweite Magnetanordnung umfasst Permanentmagnete 26, 28, 30, 32, die sich axial in z-Richtung direkt an die Magnete der ersten Magnetanordnung anschließen. Während bei dieser Ausführungsform die Anordnung von Nord- und Südpol der Magneten 30 und 32 der Anordnung der magnetischen Pole der angrenzenden Permanentmagnete 18, 20 der ersten Magnetanordnung entsprechen, ist bei den Permanentmagneten 26 und 28 die Polung gerade anders herum als bei den sich axial direkt anschließenden Permanentmagneten 14 und 16 der ersten Magnetanordnung. Insbesondere weist dementsprechend bei den Magneten 26 und 32 der Südpol radial nach außen, während der Nordpol radial nach innen zur z-Achse hin weist. Bei den Permanentmagneten 28 und 30 weist der Nordpol radial nach außen, während der Südpol radial nach innen in Richtung der z-Achse weist. Die Magnete 18 und 30 können ebenso wie die Magnete 20 und 32 z. B. auch einstückig ausgebildet sein. Das metallische und magnetisierbare Gehäuse 12 bietet für die Anordnung der Permanentmagneten der ersten und der zweiten Magnetanordnung einen magnetischen Rückschluss.

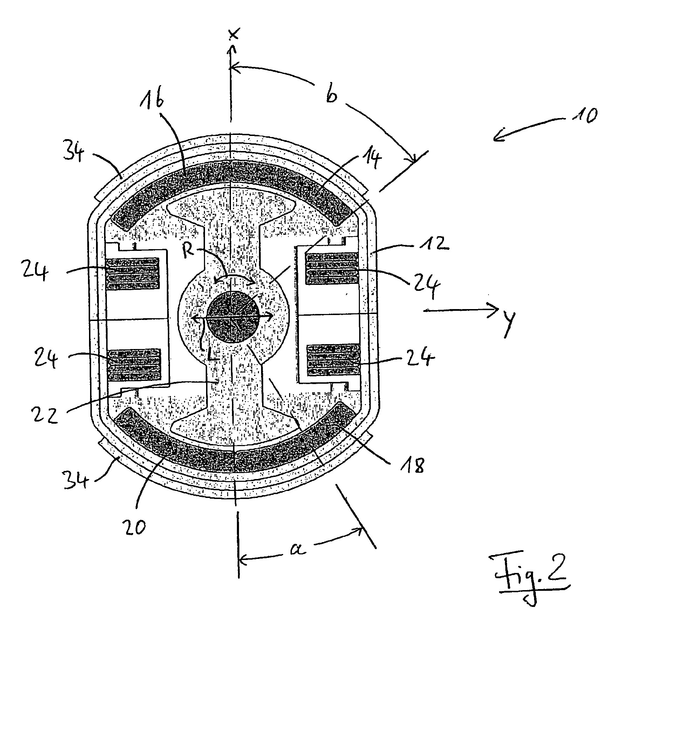

Fig. 2 zeigt den Querschnitt einer in der Form leicht abgewandelten Ausführungsform in Höhe der ersten Magnetanordnung, die für die rotatorische Schwingungsbewegung vorgesehen ist. Zusätzlich ist hier die Bewegungsrichtung der rotatorischen Schwingungsbewegung R und die Bewegungsrichtung der translatorischen Schwingungsbewegung L eingezeichnet, die der Rotor 22 beim vollständigen Betrieb ausführt.

Am Beispiel der Ausführungsform der Fig. 2 werden die Parameter a und b erläutert. b bezeichnet den Magnetsegmentwinkel, der ein Maß für die umfangsmäßige Ausdehnung eines Permanentmagneten 14, 16, 18, 20 der ersten Magnetanordnung ist. a bezeichnet die entsprechende Größe des hier innerhalb der ersten Magnetanordnung angeordneten Rotors 22, der sich um die z-Achse dreht, und wird im Folgenden als Rotoröffnungswinkel bezeichnet.

Bei der abgewandelten Ausführungsform der Fig. 2 ist das hier zweischichtig ausgestaltete metallische Gehäuse 12 im Bereich der Permanentmagneten 14, 16, 18, 20 zusätzlich durch die Gehäuseverstärkung 34 verstärkt, die ebenfalls metallisch und magnetisierbar ist und der Verbesserung des magnetischen Rückschlusses der Magnetfeldlinien der Permanentmagneten dient.

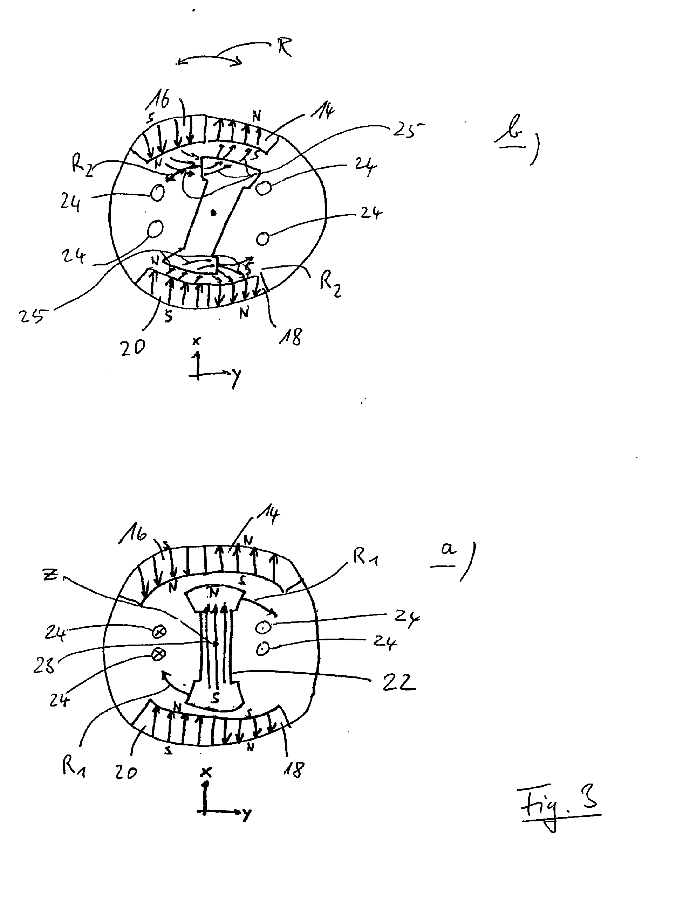

Fig. 3 zeigt die grundsätzliche Wirkungsweise der erfindungsgemäßen Ausführungsformen unter Ausnutzung der magnetischen Reluktanz als Rückstellmoment für die rotatorische Schwingungsbewegung anhand zweier schematischer Figuren. Die Magnetfeldpolungen der Permanentmagnete 14, 16, 18, 20 der ersten Magnetfeldanordnung sind hier als Pfeile zwischen den Südpolen (S) in Richtung der Nordpole (N) angedeutet. Die Magnetfeldlinien schließen sich an sich bekannter Weise über das hier nicht gezeigte Gehäuse 12 mit der Gehäuseverstärkung 34 rück. Fig. 3A zeigt die Anordnung zu einem Zeitpunkt, bei dem der Rotor 22 in seiner Ruhestellung ist.

Wird der Spulenstrom wie dargestellt in der schematisch angedeuteten Spule 24 eingeschaltet, wird in dem metallischen Rotor 22 magnetischer Fluss in Richtung der Flusslinien 23 erzeugt. Dabei soll ein Kreuz in dem dargestellten Querschnitt der Spule 24 eine entgegengesetzte Stromrichtung zu einem Punkt im dargestellten Querschnitt bedeuten. Es bildet sich ein magnetischer Südpol und ein in der Figur oben dargestellter magnetischer Nordpol. Der Rotor, der um die z-Achse drehbar ist, versucht sich energieminimierend in diesem Feld auszurichten, so dass eine Kraft in Richtung der Pfeile R1 zur Auslenkung der rotatorischen Schwingungsbewegung entsteht. Wenn der Rotor 22 sich dementsprechend energieminimierend ausgerichtet hat, stehen sich der Nordpol des Rotors 22 und der Südpol des Permanentmagneten 14 gegenüber, ebenso wie sich der Südpol des Rotors 22 und der Nordpol des Permanentmagneten 20 gegenüberstehen.

Wird jetzt der Spulenstrom zu Null eingestellt, entsteht ein Zustand entsprechend der Fig. Spulenstrom in der Spule 24 induziert werden würde. Die Magnetfeldlinien innerhalb der Magnete 16 und 14 einerseits und 20 und 18 andererseits versuchen sich über den metallischen Rotor 22 kurzzuschließen, wie es in Fig. 3b durch Pfeile 25 angedeutet ist. Höchste Energieminimierung kann erreicht werden, wenn der Rückschluss der Magnetfeldlinien über den Rotor 22 möglichst groß ist. Dies ist der Fall, wenn der Rotor symmetrisch zu den Permanentmagneten 14, 16 einerseits und 18, 20 andererseits angeordnet ist und insofern in den Figuren wieder senkrecht ausgerichtet ist. Daraus resultiert eine Kraft (magnetische Reluktanzkraft), die den Rotor 22 in seine symmetrische Ruhestellung zurückbewegen möchte. Die resultierende Bewegungsrichtung ist mit R₂ bezeichnet und ist der auslenkenden Richtung R₁, die mit Bezug zu Fig. 3a erläutert wurde, entgegengesetzt. Bei den erfindungsgemäßen Elektromotoren werden insbesondere der Rotoröffnungswinkel a und der Magnetsegmentwinkel b mit Hilfe numerischer Simulationen derart festgelegt, dass bei den sonst vorliegenden geometrischen Bedingungen die resultierende Rückstellkraft in Richtung R₂ einen gewünschten Wert aufweist, der ausreichend ist, als Rückstellmoment für die rotatorische Schwingungsbewegung des Rotors 22 zu wirken. Auf diese Weise sind andere, insbesondere mechanische, Rückstellfedern nicht notwendig.

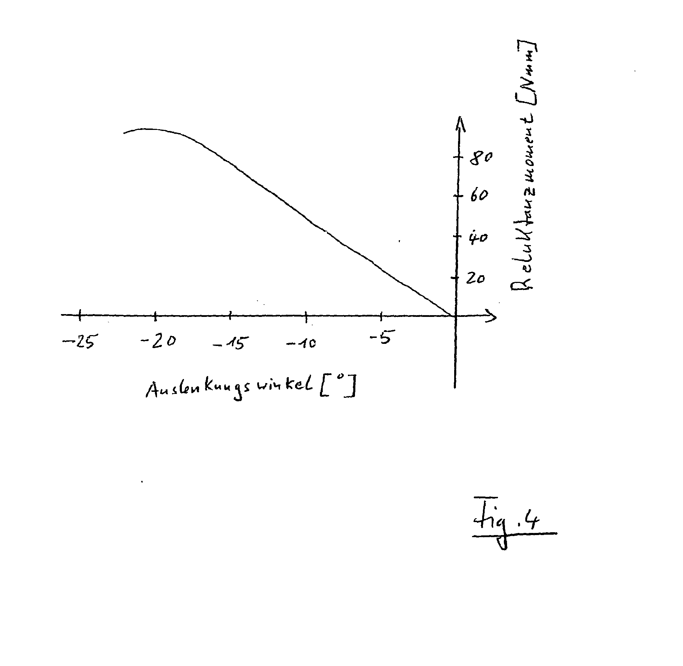

Rotoröffnungswinkel a und Magnetsegmentwinkel b werden bei allen bisher und im Nachfolgenden beschriebenen Ausführungsformen insbesondere derart ausgewählt, dass in einem möglichst großen Bereich des Auslenkungswinkels des Rotors 22 das Reluktanzmoment (das dem aus der Reluktanzkraft resultierenden Drehmoment entspricht) linear vom Auslenkungswinkel abhängt. Fig. 4 zeigt ein entsprechendes Beispiel, bei dem bis zu einem Auslenkungswinkel von -15° ein solcher linearer Zusammenhang gegeben ist. Das Reluktanzmoment wirkt dann aufgrund seiner linearen Abhängigkeit vom Auslenkungswinkel wie eine mechanische Rückstellfeder.

Die rotatorische Bewegung dieser Ausführungsform wird also durch das Einschalten des Spulenstroms in der Spule 24 eingeleitet, wodurch die in Fig. 3a angedeutete Bewegung R₁ ausgelöst wird, die den Rotor 22 aus seiner in Fig. 3a gezeigten Ruheposition auslenkt. Abschalten des Spulenstromes führt dazu, dass sich die Magnetfeldlinien der Permanentmagneten 14, 16 einerseits und 18, 20 andererseits über dem Rotor 22 kurzschließen und das resultierende magnetische Reluktanzmoment zu einer Bewegung in Richtung R₂ führt. Geeignete Auswahl der Parameter, insbesondere des Rotoröffnungswinkels a und des Magnetsegmentwinkels ermöglichen die erfindungsgemäße Ausgestaltung, dass das rücktreibende Moment in Richtung R₂ ohne weitere mechanische Rückstellfedern ausreicht, um die Schwingungsbewegung aufrechtzuerhalten.

Bei der in Fig. 1 gezeigten Ausführungsform eines erfindungsgemäßen Elektromotors kann aufgrund der zweiten Magnetanordnung mit dem Permanentmagneten 26, 28, 30, 32 zusätzlich zu der rotatorischen Schwingungsbewegung die in Fig. 2 bereits angedeutete translatorische Schwingungsbewegung L in Richtung Y bewirkt werden. Die Bewegung L entspricht einer Klopfbewegung, so dass die Magnete der zweiten Magnetanordnung im Folgenden auch als Klopfmagnete bezeichnet werden.

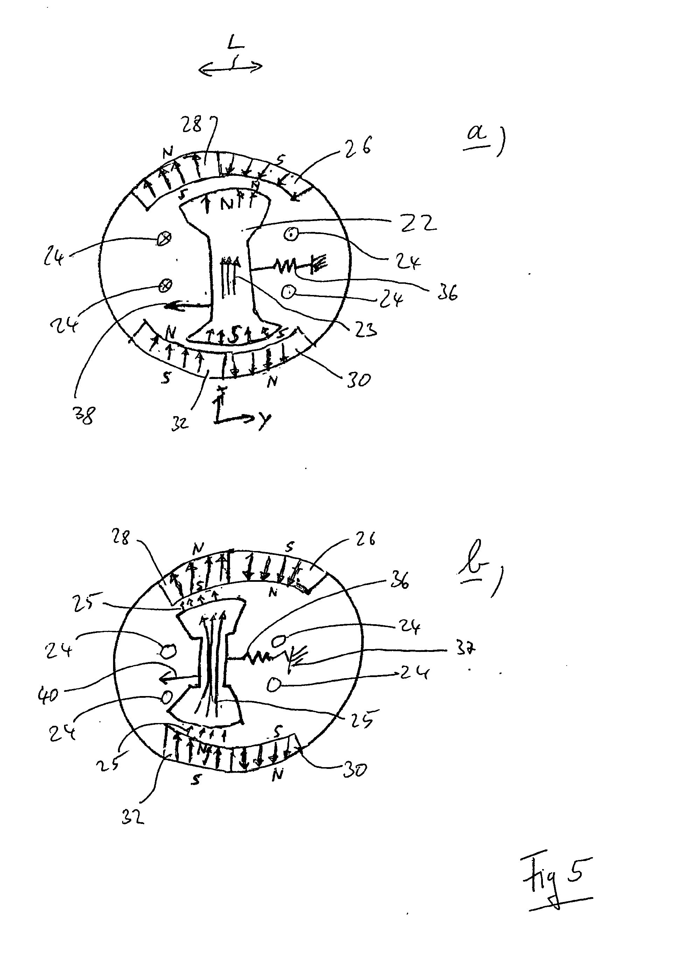

Fig. 5 zeigt die magnetischen Verhältnisse im Bereich der Klopfmagnete 26, 28, 30, 32 der zweiten Magnetanordnung, die bei der Ausführungsform der Fig. 1 in Richtung der Achse z axial an die erste Magnetanordnung anschließt.

Während die Magnetpolung der Klopfmagnete 30, 32 der Magnetpolung der Magnete 18, 20 entspricht, ist die Magnetpolung der Magnete 26, 28 umgekehrt zu der Magnetpolung der Magnete 14, 16. Bei eingeschaltetem Spulenstrom in der Spule 24, wie es in Fig. 5a angedeutet ist, entsteht in dem Rotor 22 magnetischer Fluss, der durch die Flusslinien 23 angedeutet ist. Es entsteht eine Kraft 38 aufgrund der magnetischen Wechselwirkung zwischen dem Rotor 22 und den Permanentmagneten 26, 28, 30, 32.

Aufgrund der Kraft 38 wird der Rotor 22 translatorisch in y-Richtung ausgelenkt. Es entsteht ein Zustand, wie er in Fig. 5b gezeigt ist. Wird dann, wie in Fig. 5b angedeutet, der Spulenstrom in der Spule 24 zu Null gewählt, wirkt eine magnetische Reluktanzkraft 40. Diese wird dadurch ausgelöst, dass die Magnetfeldlinien innerhalb der Permanentmagnete 28 und 32 sich über den metallischen und magnetisierbaren Rotor 22 kurzzuschließen versuchen, wie es durch die Magnetfeldlinien 25 angedeutet ist.

Die Reluktanzkraft 40 wirkt hier in dieselbe Richtung wie die Klopfkraft 38, so dass durch eine mechanische Feder 36 ausreichend Gegenkraft erzeugt werden muss, damit der Rotor 22 nicht gegen die Magnete gedrückt wird. Nur schematisch ist dargestellt, dass diese Feder 36 an einem gehäusefesten Punkt 37 festgelegt ist.

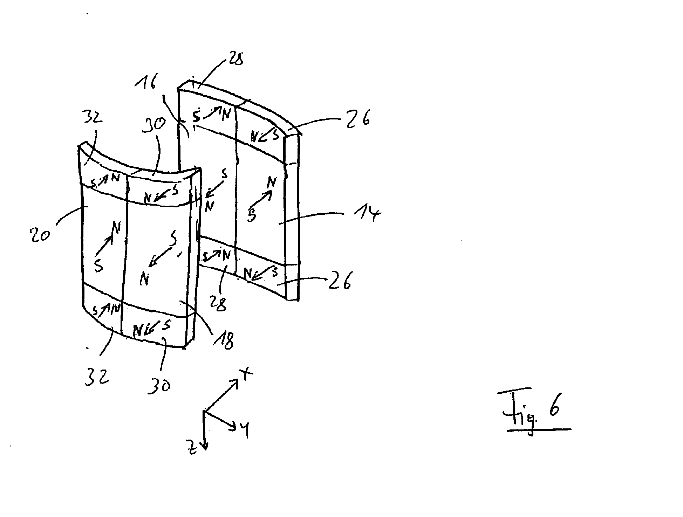

Fig. 6 zeigt eine abgewandelte Ausführungsform der Ausführungsform der Fig. 1, bei der die zweite Magnetanordnung der Klopfmagneten zweifach vorhanden ist. Je eine zweite Magnetanordnung 26, 28, 30, 32 schließt sich an den beiden axialen Seiten der ersten Magnetanordnung 14, 16, 18, 20 an. Wiederum sind in Fig. 6 die Polungen der Magnete als Pfeile angedeutet. Durch das zweifache Vorhandensein der zweiten Magnetanordnung 26, 28, 30, 32 verstärkt sich der Klopfeffekt, der mit Bezug zu Fig. 5 erläutert wurde.

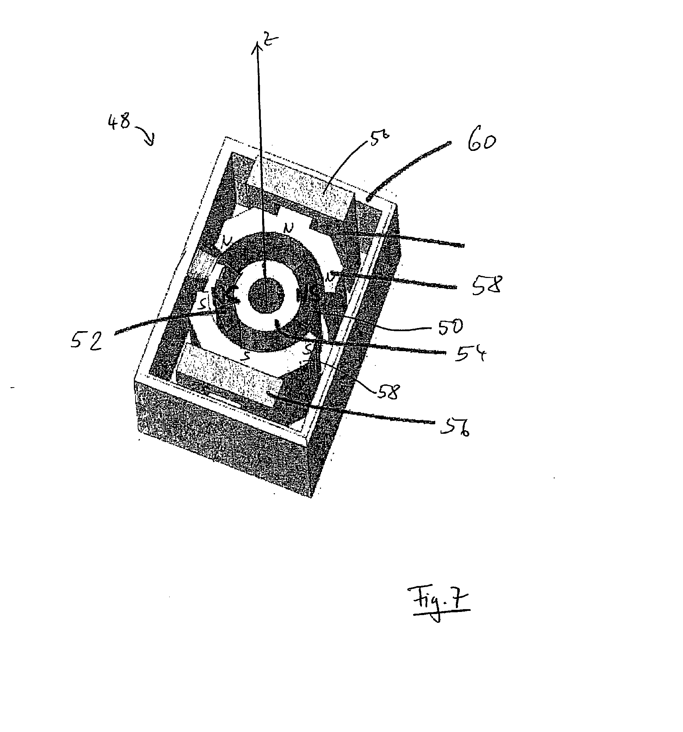

Fig. 7 zeigt eine weitere Ausführungsform zur Erzeugung einer rotatorischen Schwingungsbewegung. Bei diesem Motor 48 sind die Permanentmagneten 50, 52 an dem Rotor 54 fest montiert und bilden in der bisher gewählten Nomenklatur die Permanentmagnete eine erste Magnetanordnung. Nordpole N und Südpole S geben die Polung der magnetischen Elemente an. Der Rotor 54 dreht sich um die z-Achse zusammen mit den Permanentmagneten 50 und 52 in einem Bereich, der von zwei Statoren 58 teilweise umschlossen wird, wobei die Statoren in gezeigter Weise in einer zweiteiligen Spule 56 angeordnet sind. Wird in der Spule 56 ein Strom angeregt, wird in den Statoren magnetischer Fluss induziert. Am rotornahen Ende des einen Stators entsteht dann ein Nordpol, während am rotornahen Ende des anderen Stators 58 ein Südpol entsteht. Der magnetische Rückschluss geschieht über das metallische und magnetisierbare Gehäuse 60.

Die Rückstellkraft, die notwendig ist, um den Rotor in seine Ausgangsposition zurückzubringen, wird auch bei dieser Ausführungsform durch die magnetische Reluktanzkraft gebildet, die sich nach Ausschalten des Spulenstromes zwischen den Permanentmagneten 50, 52 und den Statoren 58 einstellt. Zum Beispiel durch numerische Simulation werden die Geometrien der einzelnen Elemente so ausgewählt, das zusätzlich zu der magnetischen Reluktanzkraft keine weiteren Rückstellelemente vorhanden sein müssen.

Auch die Ausführungsform der Fig. 7 kann um weitere Klopfmagnete erweitert werden, die sich in axialer Richtung an die Permanentmagnete der ersten Magnetanordnung 50, 52 anschließen. Dann ist auch mit der Ausführungsform der Fig. 7 zusätzlich zu der Rotationsbewegung um die Z-Achse eine Klopfbewegung des Rotors in zu den bereits geschilderten Ausführungsformen analoger Weise möglich.

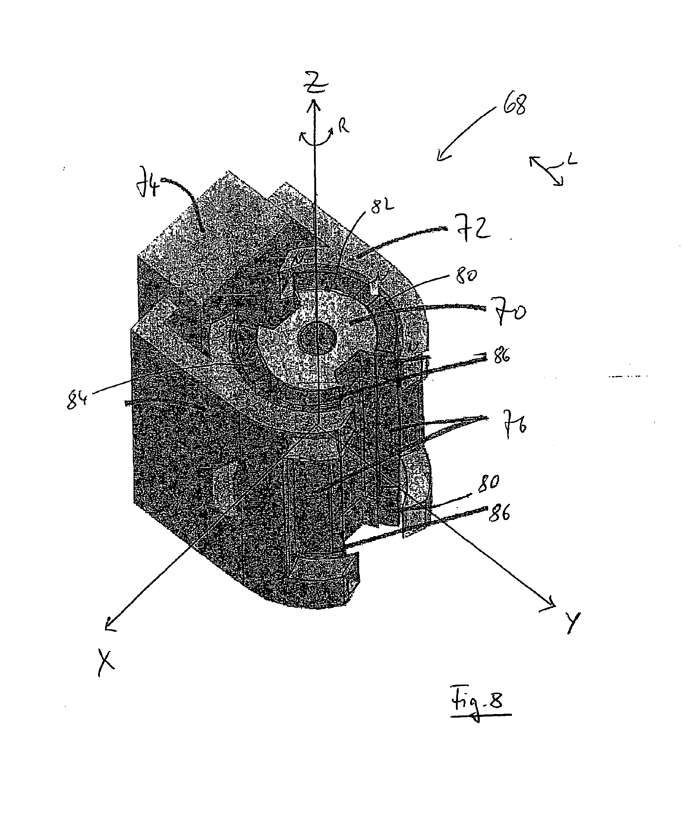

Fig. 8 zeigt eine andere Ausführungsform eines Motors 68, bei der der Aufbau asymmetrisch ist und nur eine Spule 74 gebraucht wird. Wie bei der Fig. 7 bewegen sich hier die Permanentmagnete mit dem Rotor 70 in einem festen Stator 72. In dem Stator 72 bildet sich bei entsprechender Spulenstromrichtung in der Spule 74 z.B. eine Magnetpolanordnung aus, wie sie durch die Buchstaben N und S am Stator 72 angegeben ist. In der Darstellung der Fig. 8 sind zwei von vier Permanentmagneten 76 der ersten Magnetanordnung sichtbar, die am Rotor 70 befestigt sind und für die rotatorische Schwingungsbewegung auf analoge Weise zuständig sind, wie die Permanentmagnete 14, 16, 18, 20 der ersten Magnetanordnung, die mit Bezug zu den Fig. 1 bis 5 und 6 geschildert ist. Zwei weitere Permanentmagnete der ersten Magnetanordnung sind in der Darstellung der Fig. 8 nicht erkennbar, da sie vom Stator 72 abgedeckt werden.

In Richtung der z-Achse schließen sich auf beiden Seiten der Permanentmagnete der ersten Magnetanordnung Klopfmagnete 80, 82, 84, 86 der zweiten Magnetanordnung an, die für die translatorische Schwingungsbewegung L in y-Richtung verantwortlich sind. Auch bei der Ausführungsform der Fig. 8 sind die Geometrien derart gewählt, dass für die rotatorische Schwingungsbewegung um die z-Achse das magnetische Reluktanzmoment als einziges Rückstellmoment dient, um den Rotor 70 nach der Auslenkung in rotatorischer Richtung und Abschalten des Spulenstroms wieder in seine Ausgangsposition zurückzubringen.

Die Ausführungsformen, die mit Bezug zu den Fig. 1 bis 8 beschrieben wurden, zeichnen sich dadurch aus, dass der Rotor als erste schwingungsfähige Komponente sowohl die rotatorische Schwingungsbewegung als auch die translatorische Schwingungsbewegung zur Verfügung stellt, die z.B. direkt auf einen Bürstenkopf einer Zahnbürste übertragen werden können.

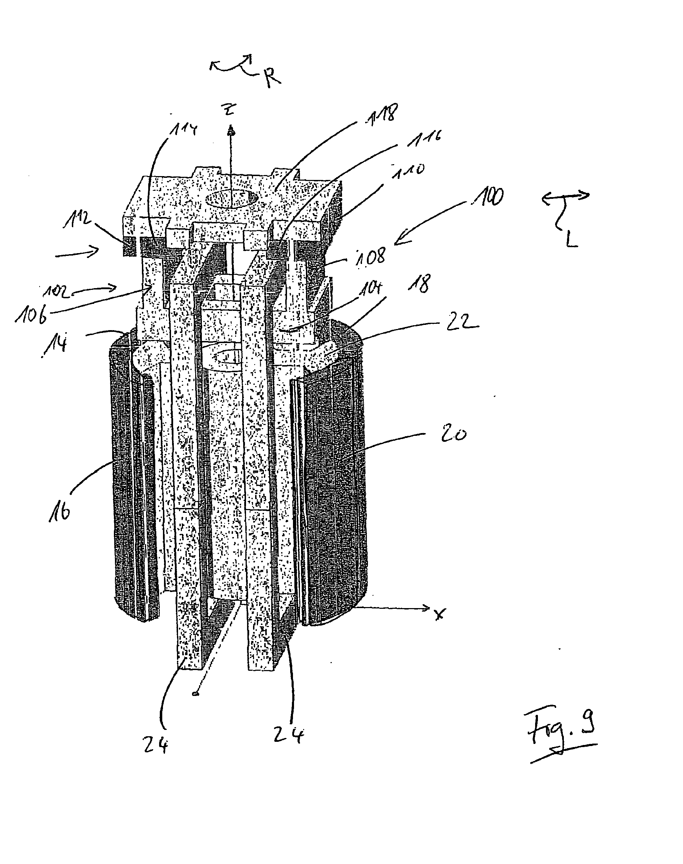

Fig. 9 zeigt eine Ausführungsform eines Motors 100, bei der eine erste schwingungsfähige Komponente durch den Rotor 22 gebildet wird, der hier nur für die rotatorische Schwingungsbewegung zuständig ist. Die rotatorische Schwingungsbewegung wird durch eine erste Magnetanordnung 14, 16, 18, 20 durch das Magnetfeld einer Spule 24 erzeugt, wie es mit Bezug zu der ersten Magnetanordnung der Fig. 1 bereits erläutert worden ist. Die Funktionsweise ist der Ausführungsform der Fig. 1 gleich, so dass dieselben Bezugsziffern gewählt wurden.

Auch die Magnetisierung der Permanentmagneten 14, 16, 18, 20 ist der Ausführungsform der Fig. 1 gleich.

Auch bei der Ausführungsform der Fig. 9 ist der Rotor 22 innerhalb der Spule 24 angeordnet, die hier aus zwei Elementen besteht und in der gezeigten Anordnung ein Magnetfeld in x-Richtung erzeugt, wenn Strom durch sie fließt. Der Rotor 22 ist um die z-Achse drehbar gelagert, so dass er bei eingeschalteter Spule durch das dadurch erzeugte Magnetfeld magnetisiert wird.

Innerhalb der Spulenwicklung der Spule 24 befindet sich außerdem ein U-förmiges, z.B. aus Eisen bestehendes, Flussleitelement 102 mit einer Basis 104 und zwei Flussleitschenkeln 106, 108. Bei eingeschaltetem Spulenstrom wird darin ein magnetischer Fluss induziert, der von einer zweiten Magnetanordnung aufgenommen wird, die zwei Permanentmagnete umfasst, wobei z.B. die Segmente 110 und 112 Südpole sind und die Segmente 114 und 116 Nordpole. Die Magnetsegmente sind fest mit einem Läufer 118 verbunden, der derart gelagert ist, dass er eine translatorische Schwingungsbewegung in Richtung L ausführen kann.

Induktion eines magnetischen Flusses in dem Flussleitelement 102 durch die Spule 24 bewirkt eine energieminimierende Ausrichtung der Magneten der zweiten Magnetanordnung 110, 112, 114, 116, wodurch der Läufer 118 in x-Richtung, also bezüglich der Drehachse z des Rotors 22 in radialer Richtung, ausgelenkt wird.

Der Rotor 22, das Flussleitelement 102 und der Läufer 118 haben jeweils eine zentrale Bohrung, durch die eine nicht dargestellte Welle geführt ist, die von dem Rotor 22 zur Rotationsbewegung mitbewegt wird. Zumindest die zentrale Bohrung des Läufers 118 ist dabei derart ausreichend groß dimensioniert, dass eine mit dem Rotor 22 verbundene Welle die translatorische Schwingungsbewegung L des Läufers 118 nicht mitmacht.

Die Schwingungsbewegung des Läufers 118 und des Rotors 22 sind daher unabhängig voneinander. Der Läufer 118 und der Rotor 22 können daher gegebenenfalls als unabhängige Abtriebe für eine translatorische (L) und eine rotatorische (R) Schwingungsbewegung eingesetzt werden.

Auch bei der Ausführungsform der Fig. 9 werden ähnlich der Ausführungsform der Fig. 1 die Geometrien der einzelnen Elemente, insbesondere dem Rotoröffnungswinkel des Rotors 22 und der Magnetsegmentwinkel der Permanentmagneten der ersten Magnetanordnung, derart gewählt, dass das magnetische Reluktanzmoment als rückstellende Kraft für die rotatorische Schwingungsbewegung wirkt.

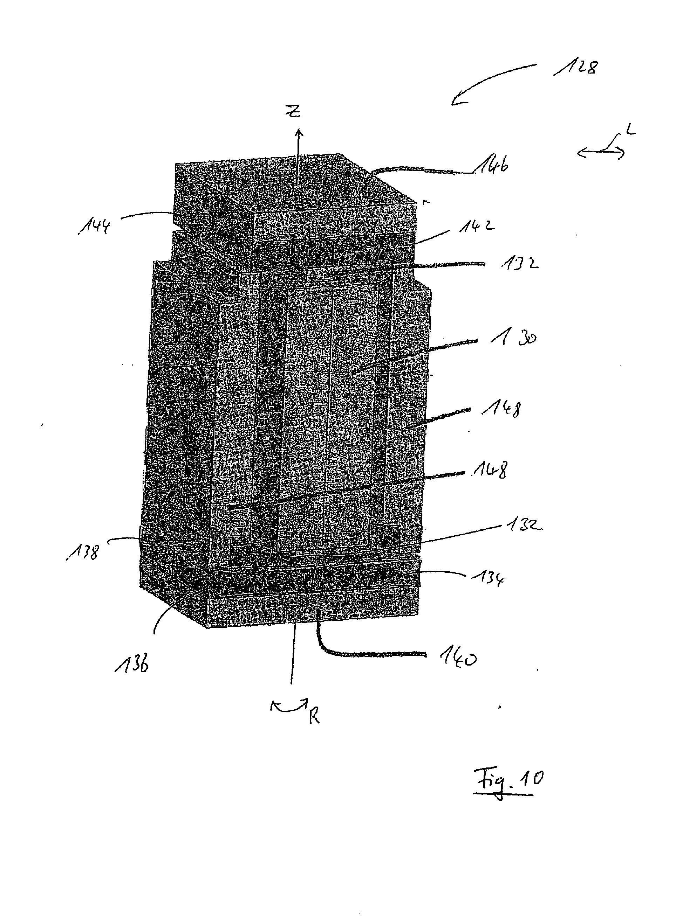

Fig. 10 zeigt eine weitere Ausführungsform des erfindungsgemäßen Elektromotors 128, bei der die rotatorische Schwingungsbewegung und die translatorische Schwingungsbewegung von zwei unabhängigen Elementen ausgeführt werden.

Eine Spule 130 umschließt hier einen metallischen und magnetisierbaren Kern 132. In der Anordnung der Fig. 10 ist der Kern 132 in seiner Längsausrichtung parallel zur Spulenachse. Die für die Rotation zuständige erste Magnetanordnung ist in der Fig. 10 unterhalb der Spule 130 angeordnet und umfasst die Permanentmagneten 134, 136, 138. Ein vierter Permanentmagnet ist in der Darstellung der Fig. 10 nicht erkennbar und bildet zusammen mit den Permanentmagneten 134, 136, 138 ein Viereck. Die Polung der Permanentmagneten ist jeweils mit den Buchstaben N (Nordpol) und S (Südpol) angegeben. Die Polung des nicht sichtbaren Magnetes entspricht der des Permanentmagneten 136. Unterhalb der Permanentmagneten befindet sich ein metallisches magnetisierbares Element 140 als magnetischer Rückschluss. Wird in der Spule 130 z.B. ein Strom induziert, der zu der Ausbildung eines Nordpoles am unteren Ende des Kernes 132 führt, so wird eine Bewegung der Permanentmagneten 134, 136, 138 zusammen mit dem metallischen Rückschluss 140 um die z-Achse angeregt. In der Fig. 10 oberhalb der Spule 130 sind die Permanentmagneten einer zweiten Magnetanordnung angeordnet, die für eine Klopfbewegung zuständig ist. Die Polung dieser Permanentmagnete 142, 144 ist ebenfalls mit dem Buchstaben N (Nordpol) und S (Südpol) angegeben. Wird in der Spule 130 ein Strom angeregt, der in dem metallischen Kern 132 einen magnetischen Fluss erzeugt, der zu dem Südpol am oberen Ende des Kernes 132 führt, so wird sich die Anordnung der Permanentmagnete 142, 144 in der Fig. 10 nach links bewegen. Umpolung der Stromrichtung führt zu einer Bewegung nach rechts. Die Permanentmagnete 142, 144 sind über ein Element 146 magnetisch rückgeschlossen, das geeignet magnetisierbares metallisches Material umfasst.

Mit der Bezugsziffer 148 sind Gehäuseteile bezeichnet.

Durch numerische Simulation können die Anordnung und Ausgestaltung der Permanentmagneten 134, 136, 138 in Bezug zu dem Kern 132 so festgelegt werden, dass auch bei dieser Ausführungsform die magnetische Reluktanzkraft als Rückstellmoment für die rotatorische Schwingungsbewegung dient. Das Element 140 kann also als Abtrieb für eine rotatorische Schwingungsbewegung und das Element 146 als Abtrieb für eine translatorische Schwingungsbewegung dienen.

Allen beschriebenen Ausführungsformen ist das erfindungsgemäße Merkmal gemeinsam, dass die magnetische Reluktanzkraft als Rückstellmoment für die rotatorische Schwingungsbewegung eingesetzt wird.

Um zu erreichen, dass die magnetische Reluktanzkraft eine ausreichende Rückstellkraft für die rotatorische Schwingungsbewegung zur Verfügung stellt, wird erfindungsgemäß wie folgt vorgegangen. Zunächst werden die gewünschten Anforderungen an den Motor (zum Beispiel Drehmoment, Frequenz, Leistung, maximale geometrische Abmessungen oder andere konstruktive Einschränkungen) zusammengestellt. Ein Motorsystem z. B. entsprechend einer der gezeigten Ausführungsformen wird angenommen. Insbesondere der Magnetsegmentwinkel b und der Rotoröffnungswinkel a, wie sie mit Bezug zu Fig. 2 erläutert sind, oder entsprechende Größen bei anderen Geometrien, werden im Rahmen einer numerischen Simulation so lange variiert, bis eine geeignete Konfiguration gefunden ist, bei der das Reluktanzmoment über den vorgegebenen Winkelbereich linear ist.

Schließlich kann damit auch die gewünschte Frequenz für die rotatorische Schwingungsbewegung festgelegt werden. Dazu wird eine analoge Federkonstante aus dem Reluktanzmoment und dem Auslenkungswinkel bestimmt. Bei linearem Verlauf des Reluktanzmomentes in Abhängigkeit des Winkels (wie es zum Beispiel bei der Fig. 4 erkennbar ist) ist die Federkonstante konstant. Weiterhin wird das Massenträgheitsmoment des Rotors inklusive der Welle berechnet. Die Oszillationsfrequenz ergibt sich dann zu (1/(2 π)) · (Federkonstante/Massenträgheitsmoment)^{½}. Dieses Beispiel berechnet die Frequenz vereinfacht als einen Ein-Massenschwinger, wobei in an sich bekannter Weise eine zweite Masse, die zum Beispiel durch das Gehäuse gebildet wird, in die Berechnung mit einbezogen werden kann. Durch Variation insbesondere des Magnetsegmentwinkels und des Rotoröffnungswinkels lässt sich der Verlauf des Reluktanzmomentes in Abhängigkeit des Auslenkungswinkels, also der Federkonstante, auswählen. Durch entsprechende Auswahl der Federkonstante und des Trägheitsmomentes kann die gewünschte Frequenz ausgewählt werden.

Bei Ausführungsformen, die sowohl eine rotatorische als auch eine translatorische Schwingungsbewegung zur Verfügung stellen, kann die Rückstellkraft für die translatorische Schwingungsbewegung durch mechanische Rückstellelemente gewährleistet werden. Insbesondere lässt sich so die Resonanzfrequenz der translatorischen Schwingungsbewegung weit entfernt von der Resonanzfrequenz der rotatorischen Schwingungsbewegung einstellen, so dass die einzelnen Schwingungen unabhängig voneinander angeregt werden können, wenn die Anregung des Spulenstromes in der Spule der Resonanzfrequenz einer dieser Schwingungsbewegungen entspricht.

### Bezugszeichenliste

- 10: Elektromotor
- 12: Gehäuse
- 14, 16, 18, 20: Permanentmagnete der ersten Magnetanordnung
- 22: Rotor
- 23: magnetische Flusslinien
- 24: Spule
- 25: Magnetfeldlinien
- 26, 28, 30, 32: Permanentmagnete der zweiten Magnetanordnung
- 34: Gehäuseverstärkung
- 37: gehäusefester Punkt
- 38: Klopfkraft
- 40: Reluktanzkraft
- 48: Elektromotor
- 50, 52: Permanentmagnete
- 54: Rotor
- 56: Spule
- 58: Stator
- 60: Gehäuse
- 68: Elektromotor
- 70: Rotor
- 72: Stator
- 74: Spule
- 76: Permanentmagnet der ersten Magnetanordnung
- 80, 82, 84, 86: Permanentmagnete der zweiten Magnetanordnung
- 100: Elektromotor
- 102: Flussleitelement
- 104: Basis des Flussleitelements
- 106, 108: Flussleitschenkel
- 110, 112, 114, 116: Magnetsegmente der zweiten Magnetanordnung
- 118: Läufer
- 128: Elektromotor
- 130: Spule
- 132: Spulenkern
- 134, 136, 138: Permanentmagnete der ersten Magnetanordnung
- 140: magnetischer Rückschluss
- 142, 144: Permanentmagnete der zweiten Magnetanordnung
- 146: magnetischer Rückschluss
- 148: Gehäuseteile
- R: rotatorische Schwingungsbewegung
- L: translatorische Schwingungsbewegung
- R₁, R₂: Rotationsbewegungsrichtung
- Z: Rotationsachse
- N: Nordpol
- S: Südpol

## Patentansprüche

1. Elektromotor (10, 48, 68, 100, 128) zum Betreiben eines elektrischen Kleingerätes, mit
- wenigstens einer ersten schwingungsfähigen Motorkomponente (22, 54, 70, 140),
- einer Spule (24, 56, 74, 130) zur Erzeugung eines Magnetfeldes und
- einer ersten Magnetanordnung, die wenigstens einen ersten Permanentmagneten (14, 16, 18, 20; 50, 52; 76; 134, 136, 138) aufweist, die in Wechselwirkung mit einem mit der Spule (24, 56, 74, 130) erzeugten Magnetfeld eine Kraft zur Anregung einer rotatorischen Schwingungsbewegung (R) der wenigstens einen ersten schwingungsfähigen Motorkomponente (22, 54, 70, 140) um eine Drehachse (z) erzeugt,
**dadurch gekennzeichnet, dass**
die wenigstens eine erste schwingungsfähige Motorkomponente (22, 54, 70) und die erste Magnetanordnung derart ausgestaltet sind, dass das zwischen der ersten schwingungsfähigen Motorkomponente (22, 54, 70, 140) und dem wenigstens einen Permanentmagneten (14, 16, 18, 20; 50, 52; 76; 134, 136, 138) der ersten Magnetanordnung wirkende magnetische Reluktanzmoment als Rückstellmoment für die rotatorische Schwingungsbewegung (R) wirkt.

2. Elektromotor nach Anspruch 1, **dadurch gekennzeichnet, dass** die wenigstens eine erste schwingungsfähige Motorkomponente (22, 54, 70, 140) und die erste Magnetanordnung derart ausgestaltet sind, dass das magnetische Reluktanzmoment zumindest in einem Bereich des Auslenkungswinkels der ersten schwingungsfähigen Komponente (22, 54, 70, 140) unterhalb eines Maximalauslenkungswinkels linear vom Auslenkungswinkel abhängt.

3. Elektromotor nach einem der Ansprüche 1 oder 2, **gekennzeichnet durch** wenigstens eine zweite schwingungsfähige Motorkomponente (118, 146) und eine zweite Magnetanordnung, die wenigstens einen zweiten Permanentmagneten (110, 112, 114, 116; 142, 144) aufweist, der in Wechselwirkung mit einem mit der Spule (24, 130) erzeugten Magnetfeld eine Kraft zur Anregung einer translatorischen Schwingungsbewegung (L) der wenigstens einen zweiten schwingungsfähigen Motorkomponente (118, 146) erzeugt.

4. Elektromotor nach einem der Ansprüche 1 oder 2, **gekennzeichnet durch** eine zweite Magnetanordnung, die wenigstens einen zweiten Permanentmagneten (26, 28, 30, 32; 80, 82, 84, 86) aufweist, der in Wechselwirkung mit einem mit der Spule (24, 74) erzeugten Magnetfeld eine Kraft zur Anregung einer translatorischen Schwingungsbewegung (L) der wenigstens einen ersten schwingungsfähigen Motorkomponente (22, 70) erzeugt.

5. Elektromotor nach einem der Ansprüche 3 oder 4, **dadurch gekennzeichnet, dass** die translatorische Schwingungsbewegung (L) senkrecht zur Drehachse (z) der rotatorischen Schwingungsbewegung (R) ist.

6. Elektromotor nach einem der Ansprüche 3 bis 5, **dadurch gekennzeichnet, dass** die translatorische (L) und die rotatorische (R) Schwingungsbewegung unterschiedliche Resonanzfrequenzen aufweisen.

7. Elektromotor nach einem der Ansprüche 3 bis 6, **dadurch gekennzeichnet, dass** sich die Permanentmagnete der ersten (76) und der zweiten (80, 82, 84, 86) Magnetanordnung mit der ersten schwingungsfähigen Motorkomponente (70) bewegen.

8. Elektromotor nach einem der Ansprüche 1 bis 7, **dadurch gekennzeichnet, dass** die erste Magnetanordnung mehrere koaxial zu der ersten schwingungsfähigen Komponente (22, 54, 70) angeordnete Permanentmagnete (14, 16, 18, 20; 50, 52; 76) umfasst.

9. Elektromotor nach Anspruch 8, insoweit er direkt oder indirekt von Anspruch 4 abhängig ist, **dadurch gekennzeichnet, dass** die zweite Magnetanordnung mehrere Permanentmagnete (26, 28, 30, 32; 80, 82, 84, 86) umfasst, die sich in wenigstens einer axialen Richtung an die Permanentmagnete (14, 16, 18, 20; 76) der ersten Magnetanordnung anschließen.

10. Elektromotor nach Anspruch 3 oder einem der Ansprüche 5 bis 7, insoweit er direkt oder indirekt von Anspruch 3 abhängig ist, **gekennzeichnet durch** wenigstens ein Flussleitelement (102), das derart angeordnet ist, dass es mit der Spule (24) erzeugten magnetischen Fluss zur Wechselwirkung mit dem wenigstens einen zweiten Permanentmagneten (110, 116; 112, 114) leitet.

11. Elektromotor nach einem der Ansprüche 1 bis 10, **dadurch gekennzeichnet, dass** die Achse der wenigstens einen Spule (24, 56, 74) und die Drehachse (z) der rotatorischen Schwingungsbewegung (R) zueinander senkrecht stehen.

12. Elektromotor nach einem der Ansprüche 1 bis 10, **dadurch gekennzeichnet, dass** die Achse der wenigstens einen Spule (130) und die Drehachse (z) der rotatorischen Schwingungsbewegung (R) parallel zueinander sind.

13. Elektromotor nach Anspruch 12, insoweit er direkt oder indirekt von Anspruch 3 abhängig ist, **dadurch gekennzeichnet, dass** die erste (134, 136, 138) und zweite (142, 144) Magnetanordnung in Achsenrichtung der wenigstens einen Spule (130) auf unterschiedlichen Seiten der Spule (130) angeordnet sind.

14. Elektromotor nach einem der vorhergehenden Ansprüche, **gekennzeichnet durch** das Fehlen von mechanischen Rückstellfedern für die rotatorische Schwingungsbewegung.

15. Elektrisches Kleingerät mit wenigstens einem in zumindest einer rotatorischen Richtung schwingungsfähigen Element, **gekennzeichnet durch** einen Elektromotor (10, 48, 68, 100, 128) gemäß einem der vorhergehenden Ansprüche zur Anregung zumindest der rotatorischen Schwingungsbewegung (R).

16. Elektrisches Kleingerät nach Anspruch 15, **dadurch gekennzeichnet, dass** es als elektrische Zahnbürste ausgebildet ist und das wenigstens eine schwingungsfähige Element einen Bürstenkopf umfasst.

17. Verfahren zum Betreiben eines Elektromotors (10, 48, 68, 100, 128) für ein elektrisches Kleingerät, mit wenigstens einer ersten schwingungsfähigen Motorkomponente (22, 54, 70, 140), einer Spule (24, 56, 74, 130) zur Erzeugung eines Magnetfeldes und einer ersten Magnetanordnung, die wenigstens einen Permanentmagneten (14, 16, 18, 20; 50, 52; 76; 134, 136, 138) aufweist, der in Wechselwirkung mit einem mit der Spule (24, 56, 74, 130) erzeugten Magnetfeld eine Kraft zur Anregung einer rotatorischen Schwingungsbewegung (R) der wenigstens einen ersten schwingungsfähigen Motorkomponente (22, 54, 70, 140) erzeugt,
**dadurch gekennzeichnet, dass**
das magnetische Reluktanzmoment, das zwischen der wenigstens einen schwingungsfähigen Motorkomponente (22, 54, 70, 140) und dem wenigstens einen Permanentmagneten (14, 16, 18, 20; 50, 52; 76; 134, 136, 138) der ersten Magnetanordnung wirkt, als Rückstellmoment für die rotatorische Schwingungsbewegung (R) verwendet wird.

18. Verfahren zur Herstellung eines Elektromotors (10, 48, 68, 100, 128) gemäß einem der Ansprüche 1 bis 14, bei dem, vorzugsweise im Rahmen einer numerischen Simulation, die Geometrien der wenigstens einen ersten schwingungsfähigen Motorkomponente (22, 54, 70, 140) und des wenigstens einen Permanentmagneten (14, 16, 18, 20; 50, 52; 76; 134, 136, 138) der ersten Magnetanordnung derart festgelegt werden, dass das magnetische Reluktanzmoment als Rückstellmoment für die rotatorische Schwingungsbewegung (R) verwendet werden kann.

19. Verfahren nach Anspruch 18, bei dem, vorzugsweise im Rahmen einer numerischen Simulation, der Rotoröffnungswinkel (a) der ersten schwingungsfähigen Motorkomponente (22, 54, 70) und der Magnetsegmentwinkel (b) der ersten Magnetanordnung derart festgelegt werden, dass das magnetische Reluktanzmoment als Rückstellmoment für die rotatorische Schwingungsbewegung (R) verwendet werden kann.

20. Verfahren nach einem der Ansprüche 18 oder 19, bei dem, vorzugsweise im Rahmen einer numerischen Simulation, die Geometrien der wenigstens einen ersten schwingungsfähigen Motorkomponente (22, 54, 70, 140) und der ersten Magnetanordnung derart festgelegt werden, dass das magnetische Reluktanzmoment zumindest in einem Bereich des Auslenkungswinkels der ersten schwingungsfähigen Komponente (22, 54, 70, 140) unterhalb eines Maximalauslenkungswinkels linear vom Auslenkungswinkel abhängt.
